# EUROPEAN PATENT SPECIFICATION

(11) **EP 3 648 919 B1**
(45) Date of publication and mention of the grant of the patent: **15.09.2021**
(21) Application number: 17794433.7
(22) Date of filing: 07.07.2017
(51) Int. Cl.: B23B 13/12

(54) **LATHE LOADING CLAMP FOR SUPPORTING BARS AND RELATED BAR LOADER FOR LATHES**
LADEKLEMME EINER DREHMASCHINE FÜR STÜTZSTANGEN UND ZUGEHÖRIGER STANGENLADER FÜR DREHMASCHINEN
PINCE DE CHARGEMENT DE TOUR POUR SUPPORTER DES BARRES ET CHARGEUR DE BARRES POUR TOURS ASSOCIÉ

(43) Date of publication of application: 13.05.2020
(73) Proprietor: Bucci Automations S.p.A., 48018 Faenza (RA) (IT)
(72) Inventor: GHINASSI, Andrea, 48018 Faenza (IT); MALUCELLI, Marco, 47121 Forli' (IT)
(74) Representative: Modiano, Micaela Nadia
(86) International application number: PCT/IT2017/000139
(87) International publication number: WO 2019/008609

(56) References cited:
- FR-A- 1 127 125
- GB-A- 1 320 257
- GB-A- 2 096 499
- US-A- 4 100 827
- US-A- 4 596 168

## Description

The present invention relates to a lathe loading clamp for supporting bars to be machined according to the preamble of clam 1 and also to a lathe bar loader comprising such a clamp. An example of such a lathe loading clamp and such a lathe bar loader is known from US 4 596 168 A.

The fully automated machining of raw materials is now used to provide a considerable number of mechanical parts.

In particular it is known to use automatic lathes that perform machinings in sequence on the bars that they are fed.

Obviously, automation of the entire machining cycle depends on the correct and continuous supply of bars: for this reason, bar loaders are normally used which are designed to supply the bars to be machined to a lathe, to which they are coupled.

Clearly, these loaders must supply the lathe with the bars, on which the machinings are to be performed, in such a manner that they can rotate integrally with the spindle of the lathe, maintaining the ideal alignment thereof and avoiding any flexing (which might trigger vibrational phenomena which are harmful for the quality of the machinings and for the lathe itself).

It is known to resort to clamps designed to retain the bars, provided with bar clamping means constituted by at least two jaws (or claws) which can be moved mutually closer until the bar is retained.

This type of clamp has the main drawback of reduced versatility, since each one is suitable to guide only bars of a predefined and very limited range of diameters.

Furthermore, the mechanical stresses to which traditional clamps are subjected make them subject to wear and to accidental breakages which entail frequent maintenance operations.

It should also be noted that traditional clamps, on bars having smaller diameters, do not allow optimum locking, with consequent possibility of vibrations and flexing of the bar (which, being slender, is also particularly delicate from this point of view).

The aim of the present invention is to solve the problems described above, by proposing a lathe loading clamp for supporting bars that is particularly versatile.

Within this aim, an object of the invention is to propose a lathe loading clamp for supporting bars that is suitable to support and center narrow-diameter bars as well.

Another object of the invention is to propose a lathe loading clamp for supporting bars that is scarcely subject to vibrations.

Another object of the invention is to propose a lathe loading clamp for supporting bars that is suitable to limit the risk of flexing of said bars.

Another object of the invention is to propose a lathe loading clamp for supporting bars that is scarcely subject to wear.

Another object of the invention is to propose a lathe loading clamp for supporting bars that requires little maintenance.

A further object of the present invention is to provide a lathe loading clamp for supporting bars that is relatively simple to provide in practice and is safe in application.

This aim and these objects, as well as others which will become better apparent hereinafter, are achieved by a lathe loading clamp according to claim 1.

This aim and these objects are also achieved by means of a lathe bar loader according to claim 10.

Further characteristics and advantages of the invention will become better apparent from the description of a preferred but not exclusive embodiment of the lathe loading clamp for supporting bars and of the related bar loader for lathes according to the invention, illustrated by way of non-limiting example in the accompanying drawings, wherein:

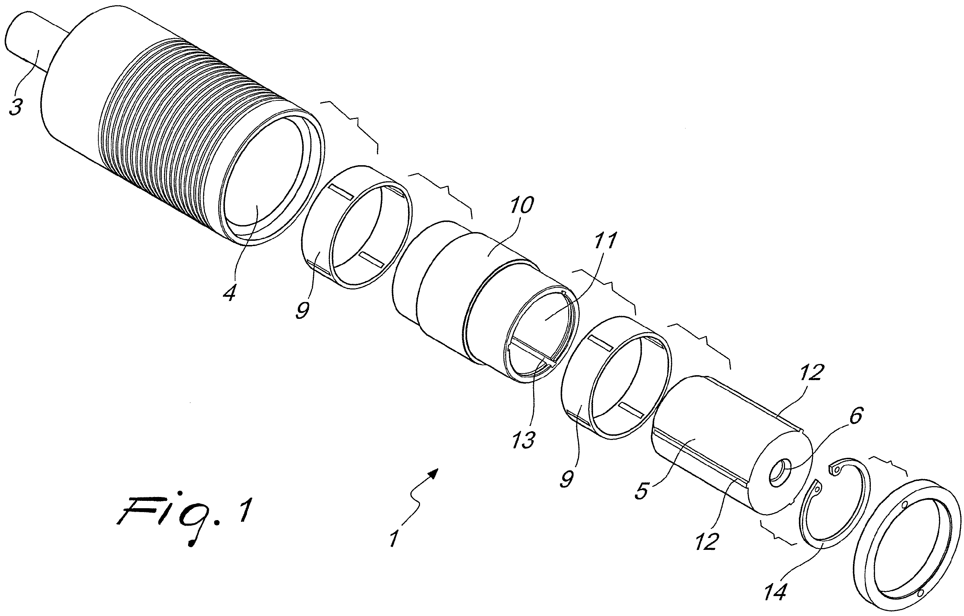

Figure 1 is an exploded perspective view of a first version of a lathe loading clamp for supporting bars according to the invention;

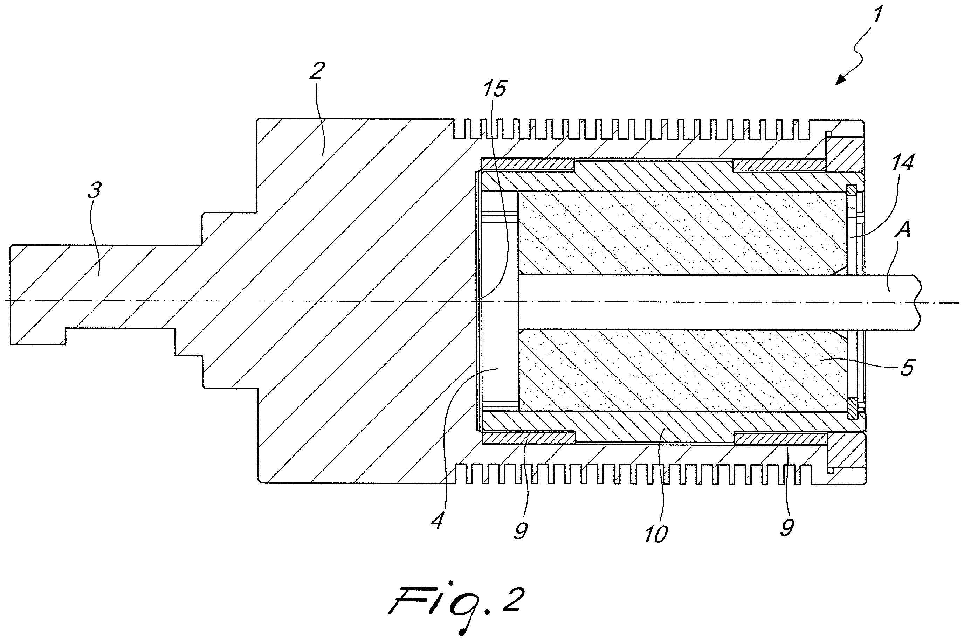

Figure 2 is a sectional view, taken along an axial plane, of the clamp of Figure 1;

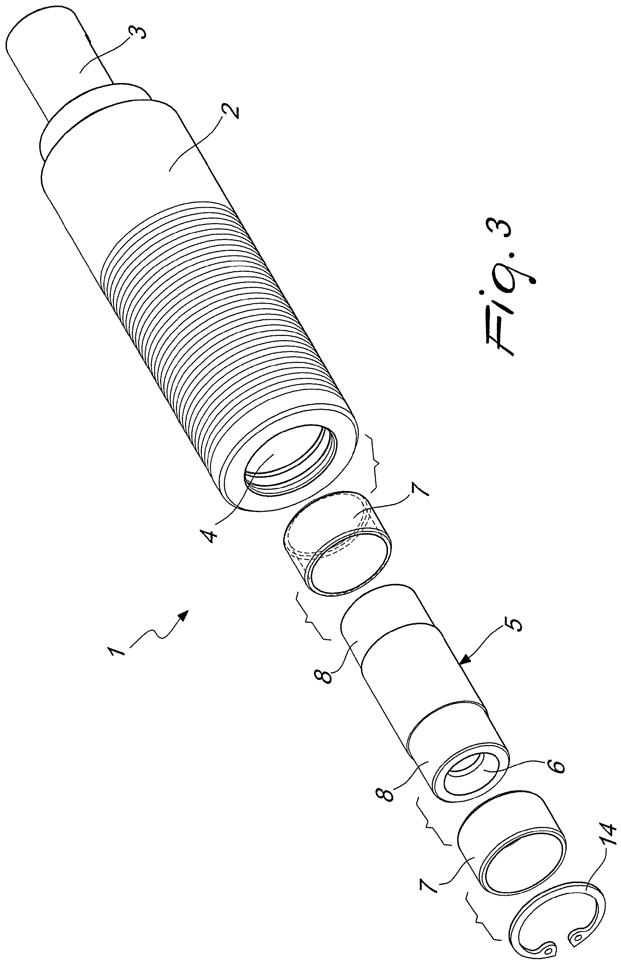

Figure 3 is an exploded perspective view of a second version of a lathe loading clamp for supporting bars according to the invention;

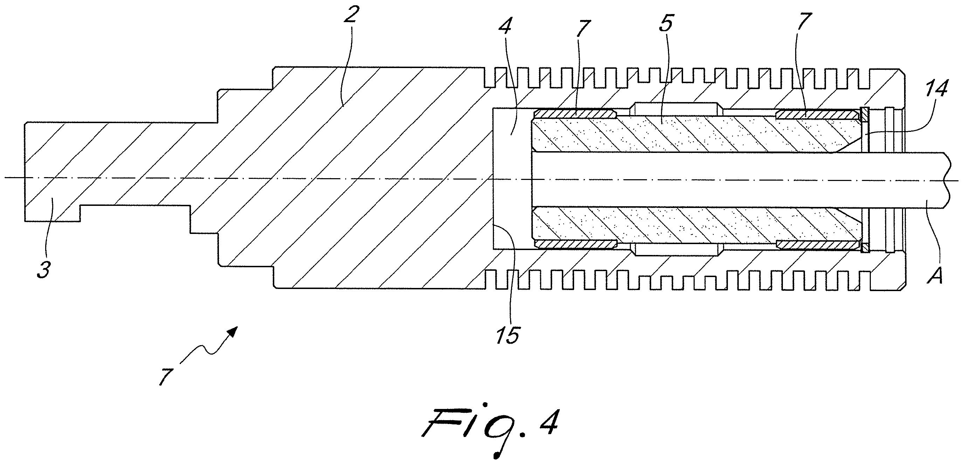

Figure 4 is a sectional view, taken along an axial plane, of the clamp of Figure 3.

With particular reference to the figures above, the reference numeral 1 generally designates a lathe loading clamp for supporting bars.

The clamp 1 comprises a main body 2 provided with a shaft 3, for coupling to a rotating assembly of the loader, which is substantially tapered at one of its ends, and with a cavity 4 at the opposite end.

A bush 5 is accommodated inside the cavity 4, with a predefined axial play, is made of at least partially polymeric material, and has an axial channel 6 the diameter of which is substantially complementary to the diameter of the bar A to be supported.

When the clamp 1 is in the configuration for use inside the respective loader, the axial channel 6 accommodates a portion of a bar A (accommodation substantially without play).

The bush 5 can be made preferably of deformable material, in order to damp the vibrations of the bar A during its rotation. The deformable material used (for example of the polymeric or elastomeric or silicone type) has a friction coefficient, with respect to the bar A that is supported, that is suitable to generate an axial force (with respect to the axis of the bar A) suitable to recover the final portion of the bar A.

To provide the bush 5 it is possible to choose polymeric materials of a different type and shape (for example also foams and emulsions), elastomers and composite materials (which have an at least partially deformable matrix).

It is possible to interpose optionally and advantageously between the bush 5 and the cavity 4 antifriction elements (in other words, antifriction, self-lubricating or, in general, made of a material with a low surface friction rubbing coefficient) with reduced overall radial play.

According to a first possible constructive solution, the antifriction element can validly comprise at least one sleeve 7 made of self-lubricating material accommodated on the bush 5.

In this case the sleeve 7 is coupled stably to the external surface of the bush 5 and can rotate freely, integrally with the bush 5, within the cavity 4.

The bush 5 can comprise segments 8 having a reduced outside diameter, on which respective sleeves 7 are fitted: the surface finish of the segments 8 can be provided in order to facilitate a rigid and stable coupling to the sleeve 7 that will be associated with it.

The sleeve 7 can be made of self-lubricating material of the type of polyamides (this family includes some materials with an extremely low friction coefficient), polytetrafluoroethylene, polymeric materials comprising PEEK, polymers with the addition of silicone oils, waxes, mineral oils and mineral fillers, antifriction metallic alloys, antifriction composites and sintered materials.

The rotation of the bush 5 within the cavity 4 is therefore substantially free (scarcely subject to friction) by virtue of the presence of the sleeves 7, which slide on the internal surface of the cavity with a low friction coefficient.

As an alternative to the use of the sleeves 7, it is possible to use as antifriction element at least one bearing 9 which is accommodated, even indirectly, on the bush 5.

The bearing 9 is preferably of the roller, barrel, ball type and the like.

The accompanying figures show a clamp 1 provided with roller bearings 9 which perfectly achieves the intended aim and objects.

Furthermore, it is specified that a rigid tubular body 10 is interposed between the bush 5 and the at least one bearing 9.

The bush 5 is thus accommodated within the duct 11 that is internal to the tubular body 10 (with axial play in order to allow a slight axial sliding thereof within the cavity 4) and the at least one bearing 9 is in turn advantageously fitted onto the outer surface of the tubular body 10: the rigidity of the tubular body 10 ensures the correct positioning of the bearings 9 in order to maintain the alignment of the rollers and their consequent rolling with very low friction, without risk of jamming.

Furthermore, it is specified that the bush 5 has an external surface that is complementary to the internal surface of the internal duct 11 of the tubular body 10.

Respective protrusions 12 and seats 13 are present in the bush 5 and in the internal duct 11 and match up in the coupling configuration in order to eliminate relative rotational motions, in any case allowing translational motions in an axial direction (with reference to the axis of the bar A being machined).

At the terminal front of the cavity 4 there is an abutment ring 14 for locking the bush 5 within the cavity 4.

The abutment ring 14 can be a stop ring made of elastic steel, the circumference of which is not complete and at the two ends of which there are holes for the insertion of a tool of the Seeger type.

An axial play equal to the difference between a first distance, defined between the internal surface of the abutment ring 14 and the end surface 15 of the cavity 4, and the length of the bush 5 is defined between the bush 5 and the cavity 4.

It is important to specify that the outer surface of the main body 2, at the part thereof within which the cavity 4 is formed, favorably can be shaped in order to increase the radiating area for greater heat dissipation.

In particular, it is noted in the accompanying figures that said surface is substantially provided with fins, so as to dissipate easily the heat generated by the friction of the sleeves 7 or by the rolling of the rollers of the bearings 9.

The present invention extends its protection also to a loader of bars A for lathes according to claim 10, which comprises a rotating assembly for the rotatable support of a supporting clamp 1, which in turn comprises a main body 2 provided with a shaft 3 for coupling to the rotating assembly, which substantially tapers at one of its ends, and with a cavity 4 at the opposite end.

A bush 5 is conveniently accommodated within the cavity 4 of the clamp 1, with a predefined axial play, is made of at least partially polymeric material, and has an axial channel 6 the diameter of which is substantially complementary to the diameter of the bar A to be supported.

The axial channel 6, in the configuration for use, accommodates a portion of the bar A.

The present invention solves the problems described earlier, proposing a lathe loading clamp 1 for supporting bars A according to claim 1 that is particularly versatile.

Conveniently, the clamp 1 is suitable to support and center also bars A having a small diameter.

Favorably, the clamp 1 is scarcely subject to vibrations, which in any case are dampened by the particular stress response of the bush 5 (elastic damping insured by the use of polymeric material and by the presence of an axial play that allows the bush to translate according to a predefined stroke within the cavity 4).

Positively, the clamp 1 according to the invention is suitable to limit the risk of flexing of said bars (owing to the elastic damping induced by it on the bar A and by virtue of the axial play that is present with respect to the cavity 4).

Effectively, the clamp 1 is scarcely subject to wear (this in particular by virtue of the specific materials used to provide the bush 5 and by virtue of the adoption of sleeves 7 made of antifriction material and/or bearings 9).

Advantageously, the clamp 1 requires limited maintenance.

Validly, the clamp 1 according to the invention is relatively simple to provide in practice and has modest costs.

The invention thus conceived is susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A lathe loading clamp for supporting bars (A), **characterized in that** it comprises a main body (2) provided with a shaft (3) for coupling to a rotating assembly, which is substantially tapered at one of its ends, and with a cavity (4) at the opposite end, said cavity (4) accommodating a bush (5), made of material that is at least partially polymeric, which has an axial channel (6) having a diameter that is suitable to be substantially complementary to the diameter of the bar (A) to be supported, said axial channel (6), in the configuration for use, being able to accommodate a portion of the bar (A), **characterised in that** said cavity (4) accommodates the bush (5) with a predefined axial play.

2. The clamp according to claim 1, **characterized in that** anti-friction elements with reduced overall radial play are interposed between said bush (5) and said cavity (4).

3. The clamp according to claim 2, **characterized in that** said anti-friction element comprises at least one sleeve (7) made of self-lubricating material that is accommodated on said bush (5), said sleeve (7) being coupled stably to the external surface of said bush (5) and being able to rotate freely integrally with said bush (5), within said cavity (4).

4. The clamp according to claim 2 and as an alternative to claim 3, **characterized in that** said anti-friction element comprises at least one bearing (9) which is accommodated, even indirectly, on said bush (5).

5. The clamp according to claim 4, **characterized in that** said bearing (9) is preferably of the roller, barrel, ball type and the like.

6. The clamp according to claim 4, **characterized in that** a rigid tubular body (10) is interposed between said bush (5) and said at least one bearing (9), said bush (5) being accommodated in the duct (11) that is internal to said tubular body (10) and said at least one bearing (9) being fitted on the external surface of said tubular body (10).

7. The clamp according to claim 6, **characterized in that** said bush (5) has an external surface that is complementary with respect to the internal surface of the internal duct (11) of said tubular body (10), respective protrusions (12) and seats (13) matching up in the coupling configuration in order to eliminate relative motions.

8. The clamp according to one or more of the preceding claims, **characterized in that** at the terminal front of said cavity (4) there is an abutment ring (14) for the locking of said bush (5) within said cavity (4) with an axial play that is equal to the difference between a first distance, defined between the internal surface of said abutment ring (14) and the terminal surface (15) of said cavity (4), and the length of said bush (5).

9. The clamp according to one or more of the preceding claims, **characterized in that** the external surface of said main body (2), at the part thereof within which said cavity (4) is formed, is shaped so as to increase the radiating area for higher heat dissipation.

10. A lathe bar loader of the type comprising a lathe loading clamp (1) according to claim 1 and a rotating assembly for the rotatable support of the clamp (1) for supporting at least one bar (A) to be machined.

## Patentansprüche

1. Eine Ladeklemme einer Drehmaschine zum Tragen von Stangen (A), **dadurch gekennzeichnet, dass** sie einen Hauptkörper (2) umfasst, ausgestattet mit einer Welle (3) zur Kopplung mit einem rotierenden Aufbau, der an einem seiner Enden im Wesentlichen spitz zuläuft, und mit einem Hohlraum (4) am gegenüberliegenden Ende, wobei der Hohlraum (4) eine Buchse (5) enthält, die aus einem Material besteht, das zumindest teilweise Polymer ist, und einen axialen Kanal (6) mit einem Durchmesser hat, der geeignet ist, im Wesentlichen komplementär zum Durchmesser der zu tragenden Stange (A) zu sein, wobei der axiale Kanal (6) in der Nutzungskonfiguration in der Lage ist, einen Teil der Stange (A) aufzunehmen; **dadurch gekennzeichnet, dass** der Hohlraum (4) die Buchse (5) mit einem vordefinierten axialen Spiel aufnimmt.

2. Die Klemme gemäß Anspruch 1, **dadurch gekennzeichnet, dass** Antifriktionselemente mit reduziertem radialem Gesamtspiel zwischen der Buchse (5) und dem Hohlraum (4) angebracht sind.

3. Die Klemme gemäß Anspruch 2, **dadurch gekennzeichnet, dass** das Antifriktionselement mindestens eine Muffe (7) aus selbstschmierendem Material umfasst, die auf der Buchse (5) angebracht ist, wobei die Muffe (7) fest mit der äußeren Oberfläche der Buchse (5) gekoppelt und in der Lage ist, sich integral mit der Buchse (5) innerhalb des Hohlraums (4) frei zu drehen.

4. Die Klemme gemäß Anspruch 2 und als Alternative zu Anspruch 3, **dadurch gekennzeichnet, dass** das Antifriktionselement mindestens ein Lager (9) umfasst, welches, auch indirekt, auf der Buchse (5) angebracht ist.

5. Die Klemme gemäß Anspruch 4, **dadurch gekennzeichnet, dass** das Lager (9) vorzugsweise vom Rollenlager-, Trommel-, Kugellagertyp und dergleichen ist.

6. Die Klemme gemäß Anspruch 4, **dadurch gekennzeichnet, dass** ein starrer rohrförmiger Körper (10) zwischen der Buchse (5) und dem mindestens einen Lager (9) angebracht ist, wobei die Buchse (5) in dem Gang (11) untergebracht ist, der innerhalb des rohrförmigen Körpers (10) liegt, und das mindestens eine Lager (9) auf die äußere Oberfläche des rohrförmigen Körpers (10) aufgesetzt ist.

7. Die Klemme gemäß Anspruch 6, **dadurch gekennzeichnet, dass** die Buchse (5) eine äußere Oberfläche hat, die komplementär zur inneren Oberfläche des inneren Gangs (11) des rohrförmigen Körpers (10) ist, wobei entsprechende Vorsprünge (12) und Sitze (13) in der Kopplungskonfiguration ineinander passen, um Relativbewegungen auszuschließen.

8. Die Klemme gemäß einem oder mehreren der obigen Ansprüche, **dadurch gekennzeichnet, dass** sich am vorderen Ende des Hohlraums (4) ein Widerlagerring (14) zur Befestigung der Buchse (5) innerhalb des Hohlraums (4) mit einem axialen Spiel befindet, das gleich der Differenz zwischen einem ersten Abstand, der zwischen der inneren Oberfläche des Widerlagerrings (14) und der abschließenden Oberfläche (15) des Hohlraums (4) bestimmt ist, und der Länge der Buchse (5) ist.

9. Die Klemme gemäß einem oder mehreren der obigen Ansprüche, **dadurch gekennzeichnet, dass** die äußere Oberfläche des Hauptkörpers (2) an dem Teil desselben, in dem der Hohlraum (4) geformt ist, eine Form hat, um die abstrahlende Fläche zwecks einer stärkeren Wärmeabstrahlung zu vergrößern.

10. Einen Drehmaschinen-Stangen-Lader von der Art, die eine Ladeklemme (1) gemäß Anspruch 1 und einen rotierenden Aufbau für die drehbare Lagerung der Klemme (1) zum Tragen mindestens einer zu bearbeitenden Stange (A) umfasst.

## Revendications

1. Pince de chargement de tour destinée à supporter des barres (A), **caractérisée en ce qu'**elle comporte un corps principal (2) pourvu d'un arbre (3) pour un couplage à un ensemble rotatif, qui est sensiblement conique à l'une de ses extrémités, et d'une cavité (4) à l'extrémité opposée, ladite cavité (4) recevant une douille (5), constituée d'un matériau qui est au moins en partie polymère, qui a un canal axial (6) ayant un diamètre qui est adapté pour être sensiblement complémentaire du diamètre de la barre (A) à supporter, ledit canal axial (6), dans la configuration d'utilisation, pouvant recevoir une portion de la barre (A), **caractérisée en ce que** ladite cavité (4) reçoit la douille (5) avec un jeu axial prédéfini.

2. Pince selon la revendication 1, **caractérisée en ce que** des éléments antifriction à jeu radial global réduit sont intercalés entre ladite douille (5) et ladite cavité (4).

3. Pince selon la revendication 2, **caractérisée en ce que** ledit élément antifriction comporte au moins un fourreau (7) constitué d'un matériau autolubrifiant qui est reçu sur ladite douille (5), le fourreau (7) étant couplé de manière stable à la surface externe de ladite douille (5) et pouvant tourner librement d'un seul tenant avec ladite douille (5), à l'intérieur de ladite cavité (4).

4. Pince selon la revendication 2 et en variante de la revendication 3, **caractérisée en ce que** ledit élément antifriction comporte au moins un palier (9) qui est reçu, même indirectement, sur ladite douille (5) .

5. Pince selon la revendication 4, **caractérisée en ce que** ledit palier (9) est de préférence du type à rouleaux, à rotule, à billes et analogue.

6. Pince selon la revendication 4, **caractérisée en ce qu'**un corps tubulaire rigide (10) est intercalé entre ladite douille (5) et ledit au moins un palier (9), ladite douille (5) étant reçue dans le conduit (11) qui est interne audit corps tubulaire (10) et ledit au moins un palier (9) étant monté sur la surface externe dudit corps tubulaire (10).

7. Pince selon la revendication 6, **caractérisée en ce que** ladite douille (5) a une surface externe qui est complémentaire par rapport à la surface interne du conduit interne (11) dudit corps tubulaire (10), des saillies (12) et des logements (13) respectifs étant mis en correspondance dans la configuration de couplage afin d'éliminer des mouvements relatifs.

8. Pince selon une ou plusieurs des revendications précédentes, **caractérisée en ce que** sur l'avant terminal de ladite cavité (4), il y a une bague de butée (14) pour le blocage de ladite douille (5) à l'intérieur de ladite cavité (4) avec un jeu axial qui est égal à la différence entre une première distance, définie entre la surface interne de ladite bague de butée (14) et la surface terminale (15) de ladite cavité (4), et la longueur de ladite douille (5).

9. Pince selon une ou plusieurs des revendications précédentes, **caractérisée en ce que** la surface externe dudit corps principal (2), sur la partie de celui-ci à l'intérieur de laquelle ladite cavité (4) est formée, est formée de manière à augmenter la surface rayonnante pour une dissipation de chaleur plus élevée.

10. Chargeur de barre pour tour du type comportant une pince de chargement de tour (1) selon la revendication 1 et un ensemble rotatif pour le support en rotation de la pince (1) pour supporter au moins une barre (A) à usiner.
